# EUROPÄISCHE PATENTSCHRIFT

(11) **EP 3 948 466 B1**
(45) Veröffentlichungstag und Bekanntmachung des Hinweises auf die Patenterteilung: **15.02.2023**
(21) Anmeldenummer: 20708081.3
(22) Anmeldetag: 02.03.2020
(51) Int. Cl.: G05D 1/00

(54) **VERFAHREN UND VORRICHTUNG ZUM TELEOPERIERTEN FAHREN EINES FAHRZEUGES**
METHOD AND DEVICE FOR TELEOPERATIVELY DRIVING A VEHICLE
PROCÉDÉ ET DISPOSITIF POUR CONDUIRE UN VÉHICULE PAR TÉLÉOPÉRATION

(30) Priorität: 05.04.2019 DE 102019204943
(43) Veröffentlichungstag der Anmeldung: 09.02.2022
(73) Patentinhaber: Robert Bosch GmbH, 70442 Stuttgart (DE)
(72) Erfinder: ECKERT, Kurt, 71254 Ditzingen (DE); BLANK, Frederik, 71634 Ludwigsburg (DE); WALOSSEK, Erik, 31180 Giesen (DE); GERALDY, Alexander, 31141 Hildesheim (DE); BENAM, Behzad, 71229 Leonberg (DE); WOLTER, Jan, 30173 Hannover (DE); SCHWARDMANN, Jens, 31137 Hildesheim (DE); FLOESS, Karl Theo, 74074 Heilbronn (DE)
(86) Internationale Anmeldenummer: PCT/EP2020/055400
(87) Internationale Veröffentlichungsnummer: WO 2020/200602

(56) Entgegenhaltungen:
- EP-A1- 3 322 204
- WO-A1-2015/114572
- US-A1- 2015 210 387

## Beschreibung

Die vorliegende Erfindung betrifft ein Verfahren zum teleoperierten Fahren eines Fahrzeuges. Die vorliegende Erfindung betrifft darüber hinaus eine entsprechende Vorrichtung, ein entsprechendes Computerprogramm sowie ein entsprechendes Speichermedium.

### Stand der Technik

Teilautonome Fahrzeuge nach dem Stand der Technik setzen eine Fahrzeugführungsschnittstelle ("Fahrerarbeitsplatz") sowie eine fahrtüchtige und zum Führen des Fahrzeuges autorisierte Person als Fahrzeuginsassen voraus, welche die Führung bei Bedarf zu übernehmen vermag. Den Gegenstand zahlreicher Forschungsprojekte bildet das sogenannte teleoperierte Fahren (*teleoperated driving*, ToD), bei welchem das Fahrzeug im Wege einer Fernsteuerung bei der Bewältigung herausfordernder Szenarien - wie Umleitungen über Feldwege, alternativer und unkonventioneller Routen o. ä. - unterstützt oder die Fahraufgabe durch einen externen Bediener in einer Leitstelle, den sogenannten Operator, zeitweise gänzlich übernommen werden kann. Fahrzeug und Leitstelle bzw. deren Betreiber sind hierzu durch ein Mobilfunknetzwerk von geringer Latenz und hoher Datenrate miteinander verbunden.

US 9,494,935 B2 offenbart Computervorrichtungen, Systeme und Verfahren für die Fernbedingung eines autonomen Passagierfahrzeugs. Wenn ein autonomes Fahrzeug einer unerwarteten Umgebung wie z. B. einer Straßenbaustelle oder einem Hindernis begegnet, die für autonome Bedienung ungeeignet ist, können die Fahrzeugsensoren Daten über das Fahrzeug und die unerwartete

Umgebung, einschließlich Bilder, Radar- und Lidar-Daten usw. erfassen. Die erfassten Daten können zu einem entfernten Bediener gesendet werden. Der entfernte Bediener kann das Fahrzeug manuell entfernt bedienen oder dem autonomen Fahrzeug Anweisungen erteilen, die von verschiedenen Fahrzeugsystemen ausgeführt werden sollen. Die zu dem entfernten Bediener gesendeten erfassten Daten können optimiert werden, um Bandbreite zu sparen, indem z. B. eine eingeschränkte Untermenge der erfassten Daten versendet wird.

Ein Fahrzeug gemäß US 9,767,369 B2 kann ein oder mehrere Bilder einer Umgebung des Fahrzeugs empfangen. Das Fahrzeug kann auch eine Umgebungskarte erhalten. Das Fahrzeug kann auch mindestens ein Merkmal in den Bildern mit einem oder mehreren Merkmalen in der Karte abgleichen. Das Fahrzeug kann auch einen bestimmten Bereich in dem einen oder den mehreren Bildern identifizieren, der einem Teil der Karte entspricht, der sich in einem Schwellenabstand zu dem einen oder den mehreren Merkmalen befindet. Das Fahrzeug kann auch das eine oder die mehreren Bilder komprimieren, um eine geringere Menge an Details in Bereichen der Bilder als dem gegebenen Bereich aufzunehmen. Das Fahrzeug kann die komprimierten Bilder auch einem entfernten System bereitstellen und darauf ansprechend Betriebsanweisungen von dem entfernten System empfangen.

Systeme und Verfahren gemäß US 9,465,388 B1 ermöglichen es einem autonomen Fahrzeug, Hilfe von einem entfernten Bediener anzufordern, wenn das Vertrauen des Fahrzeugs in den Betrieb gering ist. Ein beispielhaftes Verfahren umfasst das Betreiben eines autonomen Fahrzeugs in einem ersten autonomen Modus. Das Verfahren kann auch das Identifizieren einer Situation umfassen, in der ein Vertrauensniveau eines autonomen Betriebs im ersten autonomen Modus unter einem Schwellenwertniveau liegt. Das Verfahren kann ferner das Senden einer Anfrage zur Unterstützung an einen entfernten Assistenten umfassen, wobei die Anfrage Sensordaten einschließt, die einen Teil einer Umgebung des autonomen Fahrzeugs darstellen. Das Verfahren kann zusätzlich das Empfangen einer Antwort von dem entfernten Assistenten umfassen, wobei die Antwort einen zweiten autonomen Betriebsmodus angibt. Das Verfahren kann auch bewirken, dass das autonome Fahrzeug in der zweiten autonomen Betriebsart gemäß der Antwort von dem entfernten Assistenten arbeitet.

US 9,720,410 B2 offenbart ein weiteres Verfahren zur Fernunterstützung für autonome Fahrzeuge in vorbestimmten Situationen. EP 3 322 204 A1 offenbart ein Verfahren nach dem Oberbegriff des Anspruchs 1.

### Offenbarung der Erfindung

Die Erfindung stellt ein Verfahren zum teleoperierten Fahren eines Fahrzeuges, eine entsprechende Vorrichtung, ein entsprechendes Computerprogramm sowie ein entsprechendes Speichermedium gemäß den unabhängigen Ansprüchen bereit.

Ein Vorzug dieser Lösung liegt in der hohen funktionalen Sicherheit, sodass wesentliche Sicherheitsziele des Fahrzeuges erreicht werden: Das Fahrzeug kann zu jedem Zeitpunkt in einen sicheren Zustand überführt werden, und vom Fahrzeug geht kein Risiko für die Umwelt aus.

Durch die in den abhängigen Ansprüchen aufgeführten Maßnahmen sind vorteilhafte Weiterbildungen und Verbesserungen des im unabhängigen Anspruch angegebenen Grundgedankens möglich. So können etwa Anpassungen der ToD-Funktionalität anhand der vorhergesagten Dienstgüte (*quality of service*, QoS) in Verbindung mit durch das Fahrzeug selbst durchgeführten Messungen seines Umfeldes vorgesehen sein. Dies ermöglicht eine vorteilhafte Kombination von QoS-Prädiktion, Sensorinformationen und funktional sicherer Anpassung der ToD-Funktionalität und derer Funktionsparameter.

Gemäß einem weiteren Aspekt kann vorgesehen sein, anhand von Kenntnissen bezüglich des Fahrzeugumfeldes einen dem Fahrzeug vorausliegenden Gefahrenbereich zu erkennen und bei den Anpassungen in geeigneter Weise zu berücksichtigen. Dieses Vorgehen gestattet auch bei anstehender Gefahr eine Limitierung oder Freigabe der ToD-Funktion und derer Funktionsparameter entsprechend der vorhergesagten QoS und der mindestens erforderlichen Übertragungsrate zur Erreichung eines sicheren Zustands.

Gemäß einem weiteren Aspekt kann vorgesehen sein, die Limitierung, Freigabe oder anderweitige Anpassung der erlaubten ToD-Funktionalität sowohl im Vorfeld als auch laufend zu ermitteln und anzupassen. Eine solche Limitierung kann unter Berücksichtigung einer vorhergehenden Gefahrenanalyse, Karte mit Informationen über die Umfeldbedingungen oder von anderen Fahrzeugen bezogener Informationen sein.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 den Ablauf einer ToD-Anpassung anhand der vorhergesagten QoS.
Figur 2 schematisch eine erfindungsgemäße QoS-Prädiktion.
Figur 3 die Abhängigkeit sicherer Zustände von Fahrsituation und Umgebung.

### Ausführungsformen der Erfindung

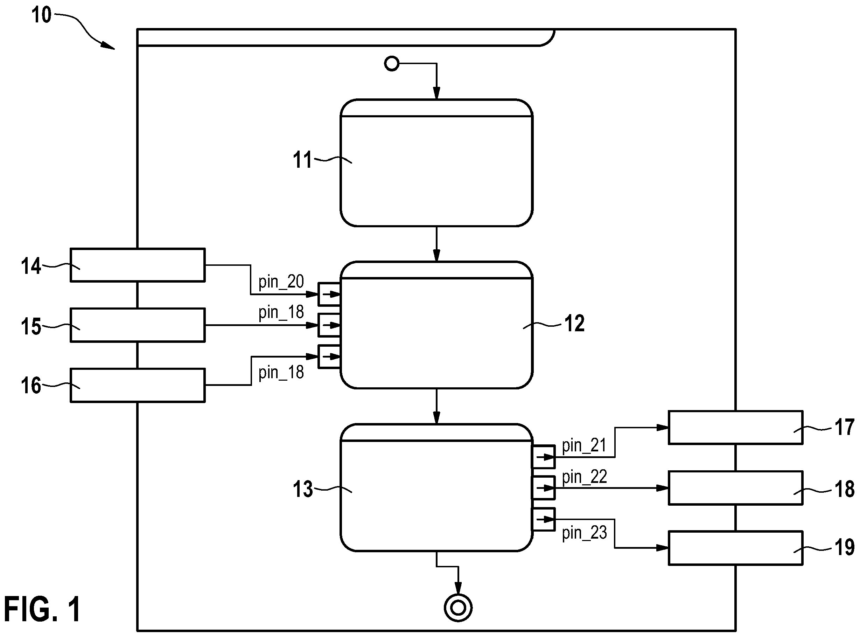

Figur 1 illustriert anhand eines Aktivitätsdiagrammes gemäß UML 2 ein erfindungsgemäßes Verfahren (10) zum teleoperierten Fahren eines Fahrzeuges: Zunächst wird die künftige Dienstgüte der Mobilfunkverbindung des Fahrzeuges zu dessen Fahrzeugleitstelle vorhergesagt (Aktion 11). Sodann werden Informationen über das Umfeld des Fahrzeuges gesammelt (Aktion 12). Anhand der auf diese Weise erlangten Kenntnisse (14, 15, 16) und der Vorhersage werden schließlich unterschiedlichste Anpassungen vorgenommen (Aktion 13), die im Nachfolgenden zu erläutern sind.

So können etwa je nach Umfeld, Zustand des Fahrzeugs, Begebenheit und QoS Prädikation beispielsweise die erlaubten parametrisierten Grenzwerte (18) der ToD-Funktion, die Auswahl (17) an möglichen ToD-Funktionen selbst oder das befahrbare Gebiet (*drivable region* 19) angepasst werden. Auf diese Weise kann zum Beispiel die Qualität des an den Operator übertragenen Bildes entsprechend der Übertragungsrate oder anderweitiger QoS-Kriterien der Funkverbindung eingeschränkt oder die Art der Steuerung oder anderweitige Betriebsmodi können angepasst werden. In Betracht kommt etwa die direkte Steuerung der Längs- und Querregelung als Vorgabe einer Wegstrecke (*maneuvering*) anstelle der Vorgabe einer Trajektorie, die ausschließlich das Fahrzeug selbständig abfahren darf.

Aktion 13, welche über den möglichen Funktionsumfang (17), Betriebsgrenzen (18) oder das Einsatzgebiet (19) entscheidet, kann sowohl auf einer vorab festgelegten Umsetzungstabelle (*lookup table*) als auch auf einer Evaluationslogik beruhen, welche fortlaufend das maximal zulässige Sicherheitsrisiko berücksichtigt. Denkbar ist ebenso eine Kombination beider Mechanismen, um die Ausfallsicherheit der entsprechenden Komponente zu erhöhen.

Beispiele für parametrisierte Betriebsgrenzen (*limits,* 18) umfassen minimale und maximale Fahrgeschwindigkeit, maximales Lenkmoment sowie minimalen Sicherheitsabstand zu einzelnen oder zusammenfassend anhand ihrer Klasse bestimmten Objekten.

Typischerweise steuert ein ToD-Operator das Fahrzeug aus einer Fahrzeugleitstelle (*vehicle control center*, VCC) ohne direkte Sichtverbindung lediglich anhand von Fahrzeug- und Umfeldinformationen, die vor allem durch Messungen (14) des Fahrzeuges gewonnen werden. Abhängig von der in Aktion 11 getroffenen Vorhersage und den in Aktion 12 erlangten Kenntnissen (14, 15, 16) mag der Funktionsumfang (17) dieser Steuerung wahlweise einem folgender Anwendungsfälle angepasst werden:
1. Der Operator steuert über die Mobilfunkverbindung direkt oder indirekt die Aktoren des Fahrzeuges.
2. Der Operator gibt über die Mobilfunkverbindung eine Trajektorie oder Bewegungsbahn vor, die das Fahrzeug selbständig abfahren muss.
3. Der Operator gibt über die Mobilfunkverbindung ein Ziel ein, zu dem sich das Fahrzeug selbständig unter Berechnung einer geeigneten Trajektorie bewegen soll.

Die Festlegung des Einsatzgebietes (19) kann entweder erfolgen, indem auf der Karte Korridore markiert werden, in denen sich das Fahrzeug bewegen darf, oder es werden umgekehrt nicht zum Befahren freigegebene Sperrzonen definiert, die das Fahrzeug nicht durchfahren darf.

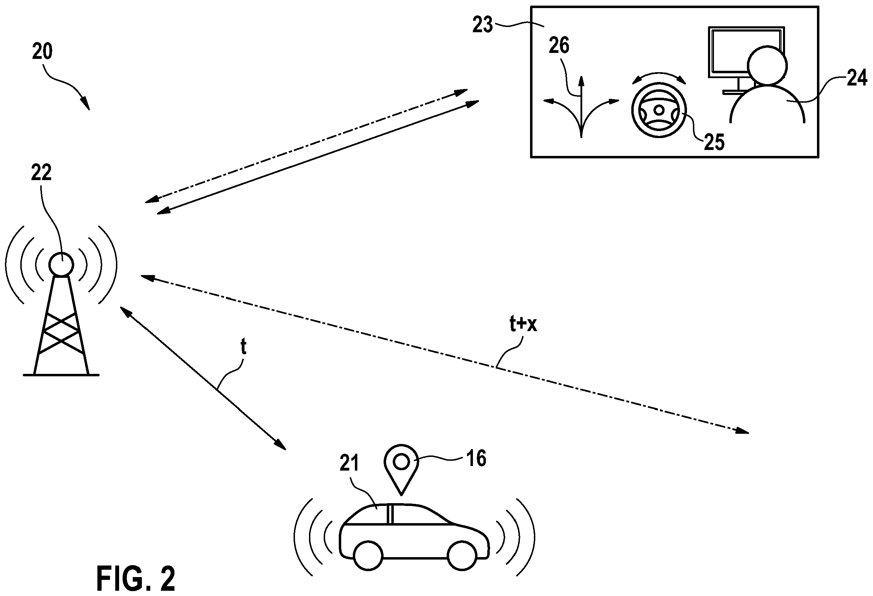

Das resultierende System (20) sei nunmehr anhand der Figur 2 im Einzelnen beschrieben. Hierbei ist zu beachten, dass die teleoperierte Fahrfunktion maßgeblich von der Übertragungsqualität abhängt. Um unter unterschiedlichsten Bedingungen einen sicheren Betrieb des Fahrzeuges (21) zu gewährleisten, wird dessen Funktion wie oben beschrieben angepasst. Bei der voraussichtlich zu erwartenden Übertragungsqualität handelt es sich um eine Vorhersage für den Zeitpunkt *t* + *x*, wobei *x* eine lediglich durch den maximalen Zeithorizont der Vorhersage beschränkte Zeitspanne darstellt.

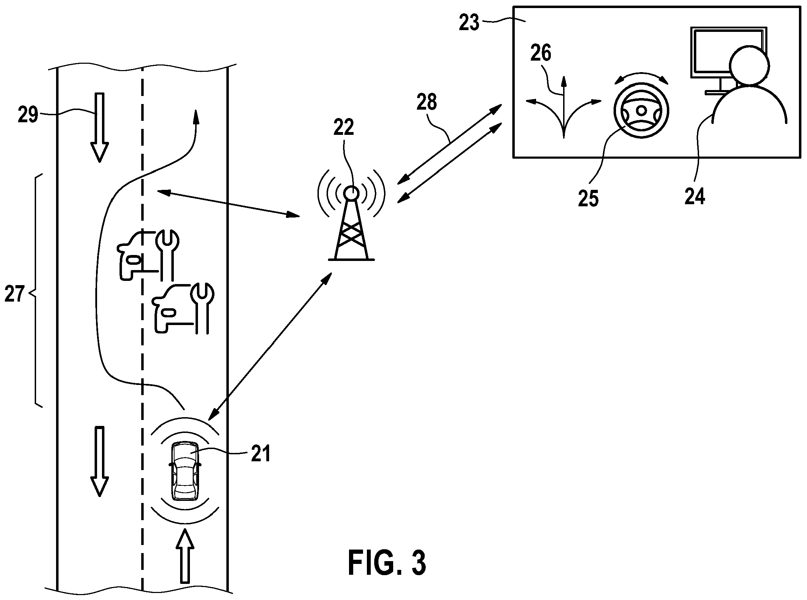

Schließlich beleuchtet Figur 3 die Arbeitsweise des Systems (20) gemäß Figur 2: Im Falle der Fernsteuerung des Fahrzeuges (21) wird insbesondere durch Messungen (14) das Umfeld erkannt (12) und klassifiziert; in diese Klassifikation können des Weiteren aus Karten (15), von der Infrastruktur oder anderen Verkehrsteilnehmern bezogene Kenntnisse (14, 15, 16) einfließen. Sollte bei der ToD-Fahrt ein Gefahrenbereich (27) wie die Gegenfahrbahn (29) durchfahren werden, so kann bereits zuvor im Wege einer Vorhersage (28) ermittelt werden, ob die Datenrate und Qualität der Mobilfunkverbindung (22) und der Zustand des Fahrzeuges (21) für das Durchfahren des Gefahrenbereiches (27) ausreichen. Wenn dies nicht der Fall ist, können der dem ToD-Operator (24) gebotene Funktionsumfang (17) oder Betriebsgrenzen (18) wie die Höchstgeschwindigkeit des Fahrzeuges (21) beschränkt werden.

Alternativ zu einer tatsächlichen Reduzierung dieser Betriebsgrenzen (18) oder Degradation des teleoperablen Funktionsumfanges (17) kann - soweit das dem System (20) zugrundeliegende Verantwortungskonzept es zulässt - dem Operator (24) auch lediglich ein entsprechender Hinweis gegeben werden und der Operator (24) das System (20) überstimmen. Sollte aus QoS-Vorhersage (28) und Umfeld-Erkennung (12) bereits hervorgehen, dass eine bestimmte Strecke nicht durchfahren werden kann, kann das System (20) eine andere Strecke vorschlagen oder dem Operator (24) vorab zusätzliche Daten bereitstellen. In diese Prädiktion (28) können auch aus anderen Informationsquellen gewonnene Erfahrungswerte einfließen.

Dieses Verfahren (10) kann beispielsweise in Software oder Hardware oder in einer Mischform aus Software und Hardware beispielsweise in einem Steuergerät des Fahrzeuges (21) implementiert sein.

## Patentansprüche

1. Verfahren (10) zum teleoperierten Fahren eines Fahrzeuges (21), wobei durch Sammeln von Informationen bezüglich des Umfeldes des Fahrzeuges (21) Kenntnisse (14, 15, 16) erlangt werden (12),
**dadurch gekennzeichnet,**
- **dass** anhand der Kenntnisse (14, 15, 16) eine Vorhersage (28) hinsichtlich einer zukünftigen Dienstgüte einer Mobilfunkverbindung (22) des Fahrzeuges (21) zu einer Fahrzeugleitstelle (23) getroffen wird (11) und
- **dass** anhand der Kenntnisse (14, 15, 16) und der Vorhersage (28) das teleoperierte Fahren betreffende Anpassungen des gebotenen Funktionsumfangs (17), der Betriebsgrenzen (18) des Fahrzeugs (21) und/oder eines befahrbaren Gebiets (19) vorgenommen werden (13).

2. Verfahren (10) nach Anspruch 1,
**dadurch gekennzeichnet, dass**
die Kenntnisse (14, 15, 16) mindestens eines der Folgenden umfassen:
- Messungen (14) des Fahrzeuges (21),
- Karteninformationen (15) oder
- einen Standort (16) des Fahrzeuges (21).

3. Verfahren (10) nach Anspruch 2,
**dadurch gekennzeichnet, dass** die Anpassung des befahrbaren Gebiets (19) des Fahrzeugs (21) anhand von Karteninformationen erfolgt.

4. Verfahren (10) nach einem der Ansprüche 1 bis 3,
**dadurch gekennzeichnet, dass**
der Funktionsumfang (17) mindestens eines der Folgenden beinhaltet:
- eine selbsttätige Navigation zu einem von einem Operator (24) ausgewählten Fahrtziel,
- eine ferngesteuerte Ausführung von Fahrmanövern (25) oder
- das Fahren entlang einer vorgegebenen Bewegungsbahn (26).

5. Verfahren (10) nach einem der Ansprüche 1 bis 4, **gekennzeichnet durch** folgende Merkmale:
- anhand der Kenntnisse (14, 15, 16) bezüglich des Umfeldes wird ein dem Fahrzeug (21) vorausliegender Gefahrenbereich (27) erkannt und
- der Gefahrenbereich (27) wird bei den Anpassungen berücksichtigt.

6. Verfahren (10) nach einem der Ansprüche 1 bis 5, **gekennzeichnet durch** mindestens eines der folgenden Merkmale:
- die vorzunehmenden (13) Anpassungen werden einer Umsetzungstabelle mit einem aus den Kenntnissen (14, 15, 16) abgeleiteten Schlüssel entnommen oder
- die vorzunehmenden (13) Anpassungen werden nach dem Erlangen (12) der Kenntnisse (14, 15, 16) aus diesen berechnet.

7. Verfahren (10) nach einem der Ansprüche 1 bis 6, **gekennzeichnet durch** folgendes Merkmal:
- das Treffen (13) der Vorhersage (28) erfolgt bezogen auf ein vorgegebenes Zeitfenster.

8. Computerprogrammprodukt,
welches eingerichtet ist, das Verfahren (10) nach einem der Ansprüche 1 bis 7 auszuführen.

9. Maschinenlesbares Speichermedium, auf dem das Computerprogrammprodukt nach Anspruch 8 gespeichert ist.

10. Vorrichtung (20, 21), die eingerichtet ist, das Verfahren (10) nach einem der Ansprüche 1 bis 7 auszuführen.

## Claims

1. Method (10) for teleoperated driving of a vehicle (21), wherein knowledge (14, 15, 16) is gained (12) by collecting information about the environment of the vehicle (21),
**characterized**
- **in that** the knowledge (14, 15, 16) is used to make (11) a prediction (28) regarding a future quality of service of a mobile radio connection (22) of the vehicle (21) with respect to a vehicle control centre (23), and
- **in that** the knowledge (14, 15, 16) and the prediction (28) are used to make (13) adjustments to the provided scope of functions (17), the operating limits (18) of the vehicle (21) and/or a navigable area (19) that relate to the teleoperated driving.

2. Method (10) according to Claim 1,
**characterized in that**
the knowledge (14, 15, 16) comprises at least one of the following:
- measurements (14) by the vehicle (21),
- map information (15) or
- a location (16) of the vehicle (21).

3. Method (10) according to Claim 2,
**characterized in that** the adjustment to the navigable area (19) of the vehicle (21) is made on the basis of map information.

4. Method (10) according to one of Claims 1 to 3, **characterized in that**
the scope of functions (17) includes at least one of the following:
- automatic navigation to a journey destination selected by an operator (24),
- remotely controlled execution of driving manoeuvres (25) or
- driving along a predefined path of movement (26).

5. Method (10) according to one of Claims 1 to 4, **characterized by** the following features:
- the knowledge (14, 15, 16) about the environment is used to identify a hazard area (27) ahead of the vehicle (21), and
- the hazard area (27) is taken into consideration for the adjustments.

6. Method (10) according to one of Claims 1 to 5, **characterized by** at least one of the following features:
- the adjustments to be made (13) are taken from a conversion table containing a key derived from the knowledge (14, 15, 16) or
- the adjustments to be made (13) are computed from the knowledge (14, 15, 16) after it is gained (12) .

7. Method (10) according to one of Claims 1 to 6, **characterized by** the following feature:
- the prediction (28) is made (13) relative to a predefined time window.

8. Computer program product,
which is designed to carry out the method (10) according to one of Claims 1 to 7.

9. Machine-readable storage medium, on which the computer program product according to Claim 8 is stored.

10. Apparatus (20, 21), which is designed to carry out the method (10) according to one of Claims 1 to 7.

## Revendications

1. Procédé (10) de conduite par téléopération d'un véhicule (21), dans lequel la collecte d'informations concernant l'environnement du véhicule (21) permet d'acquérir (12) des connaissances (14, 15, 16),
**caractérisé**
- **en ce qu'**à l'aide des connaissances (14, 15, 16), une prévision (28) est faite (11) concernant une qualité de service future d'une liaison radio mobile (22) du véhicule (21) avec un poste de contrôle de véhicule (23), et
- **en ce qu'**à l'aide des connaissances (14, 15, 16) et de la prévision (28), des adaptations concernant la conduite par téléopération de la gamme de fonctions (17) offerte, des limites de fonctionnement (18) du véhicule (21) et/ou d'une zone praticable (19) sont effectuées (13).

2. Procédé (10) selon la revendication 1, **caractérisé en ce que** les connaissances (14, 15, 16) comprennent au moins un élément parmi les suivants :
- des mesures (14) du véhicule (21),
- des informations cartographiques (15), ou
- un emplacement (16) du véhicule (21).

3. Procédé (10) selon la revendication 2, **caractérisé en ce que** l'adaptation de la zone praticable (19) du véhicule (21) est effectuée à l'aide d'informations cartographiques.

4. Procédé (10) selon l'une quelconque des revendications 1 à 3, **caractérisé en ce que** la gamme de fonctions (17) comporte au moins un élément parmi les suivants :
- une navigation autonome jusqu'à une destination sélectionnée par un opérateur (24),
- une réalisation télécommandée de manœuvres (25), ou
- la conduite le long d'une trajectoire (26) prédéfinie (26).

5. Procédé (10) selon l'une quelconque des revendications 1 à 4, **caractérisé par** les particularités suivantes :
- à l'aide des connaissances (14, 15, 16) concernant l'environnement, une zone à risque (27) située devant le véhicule (21) est identifiée, et la zone à risque (27) est prise en compte dans les adaptations.

6. Procédé (10) selon l'une quelconque des revendications 1 à 5, **caractérisé par** au moins l'une des particularités suivantes :
- les adaptations à effectuer (13) sont extraites d'un tableau de transposition à l'aide d'une clé déduite des connaissances (14, 15, 16), ou
- les adaptations à effectuer (13) sont calculées à partir des connaissances (14, 15, 16) après l'acquisition (12) de celles-ci.

7. Procédé (10) selon l'une quelconque des revendications 1 à 6, **caractérisé par** la particularité suivante :
- le fait de faire (13) la prévision (28) est effectuée en se référant à une fenêtre de temps prédéfinie.

8. Produit de programme informatique qui est conçu pour exécuter le procédé (10) selon l'une quelconque des revendications 1 à 7.

9. Support de stockage lisible par machine sur lequel est stocké le produit de programme informatique selon la revendication 8.

10. Dispositif (20, 21) qui est conçu pour exécuter le procédé (10) selon l'une quelconque des revendications 1 à 7.
